# DEMANDE DE BREVET EUROPEEN

(11) **EP 4 722 771 A1**
(43) Date de publication de la demande: **08.04.2026**
(21) Numéro de dépôt: 25205578.5
(22) Date de dépôt: 30.09.2025
(51) Int. Cl.: G02B 6/12, G02B 6/122

(54) **DISPOSITIF PHOTONIQUE III-V INTEGRE SUR SILICIUM**

(30) Priorité: 03.10.2024 FR 2410691
(71) Demandeur: Commissariat à l'Energie Atomique et aux Energies Alternatives, 75015 Paris (FR)
(72) Inventeur: RAMIREZ, Joan, 91767 PALAISEAU (FR); VIROT, Leopold, 38054 GRENOBLE Cedex 09 (FR)
(74) Mandataire: Atout PI Laplace

(57) **Abrégé**

L'invention a pour objet un objet un dispositif photonique comprenant :
- un premier guide d'onde ayant un cœur en un matériau semi-conducteur de type III-V ;
- un second guide d'onde ayant un cœur en silicium ;
- une structure de couplage comprenant :
∘ un premier prolongement du cœur du premier guide d'onde ;
∘ un second prolongement du cœur du second guide d'onde disposé au-dessous dudit premier prolongement et disposé au regard dudit premier prolongement ;
∘ une structure d'enrobage en un matériau d'enrobage ayant un indice de réfraction compris entre : d'une part l'indice de réfraction du silicium ; et d'autre part l'indice de réfraction le plus élevé dans le cœur du second guide d'onde ;

la structure d'enrobage étant disposée entre le second prolongement et le premier prolongement au moins selon la direction d'empilement.

## Description

L'invention concerne un dispositif photonique hétérogène constitué de composants optiques en semi-conducteurs de type III-V co-intégrés avec des composants optiques en silicium sur des substrats en silicium.

### Problème soulevé

De nombreuses techniques de fabrication ont été développées pour réaliser des microstructures et des nanostructures sur des substrats semi-conducteurs, permettant ainsi la création de circuits et de systèmes intégrés. Ces systèmes couvrent une large gamme d'applications, incluant les circuits microélectroniques à base de transistors, les microsystèmes de type MEMS (Micro-Electro-Mechanical Systems) ou NEMS (Nano-Electro-Mechanical Systems), les capteurs intégrés (tels que les capteurs de pression, accéléromètres, capteurs chimiques, etc.), ainsi que les systèmes photoniques et optoélectroniques intégrés sur un substrat semi-conducteur.

Plus précisément, il est possible de réaliser des circuits photoniques intégrant des émetteurs laser associés à des couches de traitement des faisceaux émis (guidage, multiplexage/démultiplexage, amplification, etc.), ces couches de traitement étant déposées sur un substrat de silicium (communément appelé « Photonic on Silicon »).

L'intégration de sources laser et d'amplificateurs optiques sur des circuits photoniques en silicium connaît une évolution rapide ces dernières années, stimulée par le besoin croissant de circuits photoniques intégrés dans divers domaines, tels que les communications optiques, la détection, l'informatique quantique, ou encore la photonique programmable. L'intégration de lasers et d'amplificateurs basés sur des semi-conducteurs III-V sur des plaques de silicium permet de combiner la versatilité, la haute densité et la facilité de production à grande échelle de la technologie CMOS avec les performances accrues obtenues grâce à l'utilisation de matériaux semi-conducteurs de type III-V. On parle alors d'une intégration hétérogène des composants photoniques en matériaux semi-conducteurs III-V et des composants photoniques en silicium. L'intégration hétérogène demeure l'option la plus appropriée pour mettre en œuvre des lasers et des amplificateurs III-V sur silicium avec un volume de production élevé et un niveau de maturité technologique avancé.

L'intégration de lasers et d'amplificateurs sur puce nécessite une transition de mode optique efficace entre le matériau de type III-V et la plate-forme photonique passive en silicium. En règle générale, des cônes adiabatiques sont utilisés pour minimiser la perte optique lors de cette transition. Pour cela, une condition d'adaptation de phase est requise. À titre d'exemple illustratif, la figure 1a montre une vue de dessus, selon le plan (X,Y), d'un dispositif photonique D0 de l'état de l'art réalisé par empilement de couches sur un substrat en silicium (non illustré). L'empilement des couches est effectué dans la direction Z, perpendiculairement au plan (X,Y). Le dispositif photonique D0 comprend un premier guide d'onde WG1' ayant un cœur en matériau semi-conducteur III-V et un second guide d'onde WG2' avec un cœur en silicium. Le dispositif photonique D0 comprend également une structure de couplage optique SC' pour transférer au moins une partie d'un signal optique propagé du premier guide d'onde WG1' vers le second guide d'onde WG2', ou inversement. La structure de couplage optique SC' comprend un premier prolongement 10' du cœur du premier guide d'onde WG1' et un second prolongement 20' du cœur du second guide d'onde WG2', disposé en dessous du premier prolongement 10'. Ces deux prolongements 10', 20' sont positionnés à des hauteurs différentes selon l'axe Z et sont placés l'un en face de l'autre pour définir une zone de chevauchement. Le transfert du signal optique d'un guide d'onde à l'autre s'effectue dans cette zone de chevauchement ZC (aussi appelée zone de couplage). Pour obtenir un couplage optique efficace entre ces deux prolongements, il est nécessaire que l'indice de réfraction effectif pour le mode confiné dans le second guide d'onde WG2' soit au moins aussi grand que l'indice effectif du mode confiné dans le premier guide d'onde WG1', ce qui constitue un couplage optique. À dimensions égales, l'indice effectif de propagation dans le silicium est bien inférieur à celui dans le matériau III-V. Ainsi, pour égaliser les indices effectifs de propagation dans les régions en vis-à-vis en silicium et en matériau III-V, il est nécessaire d'augmenter les dimensions de la région en silicium. Cela augmente l'encombrement du coupleur optique, en particulier l'épaisseur du prolongement en silicium.

Plusieurs problèmes ont été clairement identifiés dans les circuits photoniques de l'état de l'art. En effet, le couplage optique entre un composant III-V et un guide d'onde en silicium nécessite une épaisseur d'environ 500 nm pour le guide d'onde en silicium. Cependant, les plates-formes photoniques industrielles sur silicium présentent des limites inhérentes au développement de lasers et d'amplificateurs III-V intégrés, car les circuits photoniques en silicium ont des dimensions géométriques optimisées uniquement pour des fonctions passives. En particulier, la hauteur des guides d'onde en silicium est limitée à 220 nm ou 300 nm dans les fonderies industrielles, ce qui constitue une contrainte majeure. Les dispositifs actifs III-V intégrés sur des guides d'onde en silicium d'une épaisseur inférieure à 500 nm présentent de mauvaises performances en raison d'un transfert très limité du signal optique entre les composants III-V et les composants en silicium, ou inversement. Cela entraîne d'importantes pertes du signal optique lors de la transition entre un composant actif (III-V) et un composant passif (en silicium).

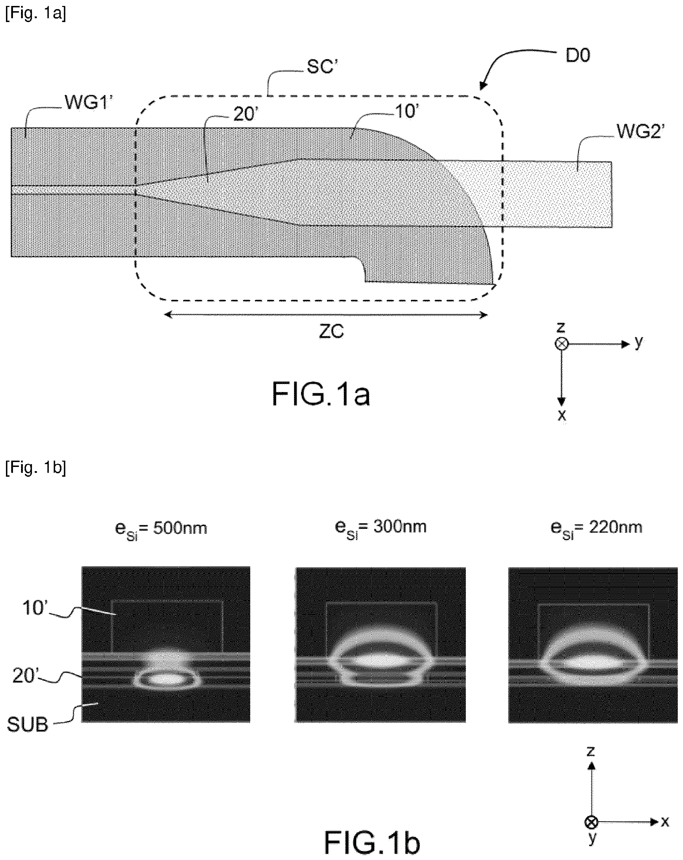

La figure 1b illustre les résultats de simulation de la transition optique pour un guide d'onde en silicium d'une épaisseur de 500 nm, 300 nm et 220 nm dans un dispositif selon l'état de l'art. L'utilisation d'un guide d'onde en silicium de 500 nm d'épaisseur (à gauche) permet un couplage efficace entre le guide d'onde III-V et le guide d'onde en silicium, avec un mode optique presque entièrement confiné dans le guide d'onde en silicium à la fin de la transition. Toutefois, l'épaississement du guide d'onde en silicium nécessite des étapes supplémentaires de dépôt, ce qui rend le procédé de fabrication plus lent, plus complexe et plus coûteux. En revanche, l'utilisation des épaisseurs standards de 300 nm et 220 nm pour le guide d'onde en silicium réduit considérablement l'efficacité du transfert du signal optique. À la sortie de la zone de couplage, une proportion importante du signal optique reste encore confinée dans le guide d'onde en semi-conducteur III-V, ce qui engendre une perte significative du signal optique à propager dans le guide d'onde en silicium.

### Art antérieur/ Restrictions de l'état de l'art

Le document FR 3 127 825 A1 divulgue une puce photonique et un procédé de fabrication de cette puce photonique.

La publication scientifique [1] décrit une solution qui consiste insérer une couche supplémentaire en silicium polycristallin entre le guide d'onde en silicium et le guide d'onde en semi-conducteur de type III-V pour améliorer le couplage optique. Cette approche présente une incompatibilité avec les procédés de fabrication standard de silicium en raison de la nécessité d'un recuit thermique à haute température pour la cristallisation de la couche supplémentaire insérée. Le recuit thermique provoque la dégradation des propriétés optiques du circuit photonique et augmente les pertes dans le signal optique propagé.

La publication scientifique [2] décrit une solution qui consiste à microstructurer le prolongement du guide d'onde en silicium de manière à obtenir une structure en dents de scie périodique dans la zone de couplage. L'inconvénient de cette approche est que l'opération de microstructuration complexifie le procédé de fabrication. De plus, l'introduction d'une surface rugueuse non-régulière dans le guide d'onde en silicium engendre des pertes optiques ce qui réduit les performances de transmission.

La publication scientifique [3] décrit une solution qui consiste à réduire considérablement l'épaisseur du guide d'onde en semiconducteur III-V dans la zone de chevauchement en plaçant les électrodes d'injection de charges du composant actif III-V de part et d'autre de ladite zone de chevauchement. Cette solution présente plusieurs inconvénients. Le premier inconvénient est la nécessité d'une étape supplémentaire de croissance des couches III-V pour créer les zones dopées N et P de chaque côté. Une telle opération de croissance par épitaxie peut induire une dégradation du guide d'onde en silicium en raison de son budget thermique. Le deuxième inconvénient est l'injection d'un courant latéral, ce qui introduit une résistance plus élevée. Le troisième inconvénient est relatif à l'injection latérale consistant à l'impossibilité d'utiliser « l'effet de confinement quantique de Stark » (traduction de Quantum Confined Stark Effect - QCSE) lors du développement de lasers modulés par électro-absorption.

### Réponse au problème et apport solution

Pour pallier les limitations des solutions existantes, l'invention propose une structure de couplage d'un composant actif en semicondcteur III-V à un guide d'onde ayant un cœur en silicium comprenant une structure d'enrobage dudit cœur. La structure d'enrobage permet d'augmenter la quantité du signal optique transmis sans augmenter l'épaisseur du cœur en silicium. Ceci permet de réduire considérablement l'encombrement du dispositif photonique intégré sur silicium et de simplifier le procédé de fabrication qui peut se baser sur des galettes de silicium standards sans dépôt supplémentaire de silicium.

De manière générale, l'invention fournit une solution efficace pour coupler le mode optique d'un guide d'ondes III-V à une plate-forme photonique industrielle en silicium. Du point de vue de la fabrication, il s'agit d'une solution simple qui n'implique aucune gravure ou recroissance de la plateforme photonique silicium, ce qui peut ajouter de la complexité et un risque supplémentaire sur la fonctionnalité.

D'un point de vue optique, les pertes du signal optique propagé après une transition sont très négligeables à la sortie de la structure de couplage selon l'invention. Plus particulièrement, l'utilisation d'une structure d'enrobage en SiGe dans le contexte de l'invention permet la croissance d'une couche cristalline connue pour avoir une faible perte de propagation aux longueurs d'onde visées. De plus, le revêtement SiGe peut être réalisé selon les procédés standards de fonderie silicium, ce qui facilite sa mise en œuvre et la qualité de la structure de couplage obtenue. Comme le matériau est déjà utilisé dans les fonderies CMOS standard, il n'ajoute aucun risque de contamination et peut être facilement mis en œuvre dans une chaine de production existante.

### Résumé /Revendications

L'invention a pour objet un dispositif photonique comprenant un empilement de couches sur un substrat selon une direction d'empilement ; ledit empilement comprenant :
- un premier guide d'onde ayant un cœur comprenant une pluralité de couches empilées ; chaque couche de ladite pluralité de couches étant en un matériau semi-conducteur de type III-V ;
- un second guide d'onde ayant un cœur en silicium ;
- une structure de couplage optique pour transférer au moins une partie d'un signal optique propagé du premier guide d'onde vers le second guide d'onde ou inversement ; la structure de couplage optique comprenant :
   o un premier prolongement du cœur du premier guide d'onde ;
   o un second prolongement du cœur du second guide d'onde disposé au-dessous dudit premier prolongement et disposé au regard dudit premier prolongement ;
   o une structure d'enrobage en un matériau d'enrobage ayant un indice de réfraction compris entre :
      d'une part l'indice de réfraction du silicium ; et d'autre part l'indice de réfraction le plus élevé parmi ceux desdits matériaux semi-conducteurs de type III-V, pour une longueur d'onde prédéterminée ;
la structure d'enrobage étant disposée entre le second prolongement et le premier prolongement au moins selon la direction d'empilement.

Selon un aspect particulier de l'invention, la structure d'enrobage comprend une première couche d'enrobage disposée sur une surface supérieure du second prolongement.

Selon un aspect particulier de l'invention, la structure d'enrobage comprend en outre une deuxième couche d'enrobage disposée sur une première surface latérale du second prolongement et une troisième couche d'enrobage disposée sur une seconde surface latérale du second prolongement. La deuxième couche d'enrobage et la troisième couche d'enrobage étant constituées dudit matériau d'enrobage.

Selon un aspect particulier de l'invention, le matériau d'enrobage est transparent pour une longueur d'onde comprise entre 1520 nm et 1565 nm et/ou pour une longueur d'onde comprise entre 1260 nm et 1360 nm.

Selon un aspect particulier de l'invention, le matériau d'enrobage est l'alliage silicium-germanium.

Selon un aspect particulier de l'invention, le matériau d'enrobage est l'alliage silicium-germanium de formule SiGeₓ, avec x compris entre 0,2 et 0,6.

Selon un aspect particulier de l'invention, la première couche d'enrobage présente une épaisseur inférieure ou égale à 130 nm.

Selon un aspect particulier de l'invention, le cœur en silicium du second guide d'onde présente une épaisseur inférieure ou égale à 300nm.

Selon un aspect particulier de l'invention, la largeur du second prolongement varie de manière graduelle.

L'invention a également pour objet un procédé de fabrication d'un dispositif photonique selon l'invention comprenant les étapes suivantes :
a) fabriquer, sur un substrat, un guide d'onde ayant un cœur en silicium comprenant un prolongement sur lequel est disposée une structure d'enrobage en un matériau d'enrobage ayant un indice de réfraction supérieur à celui du silicium pour une longueur d'onde prédéterminée ;
b) fabriquer un guide d'onde ayant un cœur comprenant une pluralité de couches empilées, avec chaque couche de ladite pluralité de couches en un matériau semi-conducteur de type III-V ; par une succession d'étapes de dépôt et de gravure de couches ; le guide d'onde présentant un prolongement disposé au regard de la structure d'enrobage ; l'indice de réfraction du matériau d'enrobage étant compris entre :
   d'une part, l'indice de réfraction du silicium ;
   et d'autre part, l'indice de réfraction le plus élevé parmi ceux desdits matériaux semi-conducteurs de type III-V, pour une longueur d'onde prédéterminée.

Selon un aspect particulier de l'invention, l'étape de fabrication a) comprend les sous étapes suivantes :
fournir un substrat sur lequel est disposé un guide d'onde ayant un cœur en silicium, ledit guide d'onde étant encapsulé dans une couche en diélectrique ;
graver la couche en diélectrique de manière à découvrir au moins une surface supérieure du guide d'onde ;
déposer sur ladite surface supérieure une première couche d'enrobage en un matériau d'enrobage ayant un indice de réfraction supérieur à celui du silicium pour une longueur d'onde prédéterminée.

Selon un aspect particulier de l'invention, l'étape de gravure est réalisée de manière à découvrir en outre au moins une partie d'une première surface latérale et d'une seconde surface latérale dudit guide d'onde ayant un cœur en silicium.

Selon un aspect particulier de l'invention, la sous-étape de dépôt comprend en outre le dépôt d'une deuxième couche d'enrobage sur la partie découverte de la première surface latérale et une troisième couche d'enrobage sur la partie découverte de la seconde surface latérale ; la deuxième couche d'enrobage et la troisième couche d'enrobage étant constituées dudit matériau d'enrobage.

Selon un aspect particulier de l'invention, l'étape de fabrication a) comprend les sous étapes suivantes :
fournir un substrat sur lequel est disposée une couche de départ en silicium ;
déposer sur la couche de départ une première couche d'enrobage en un matériau d'enrobage ayant un indice de réfraction supérieur à celui du silicium pour une longueur d'onde prédéterminée ;
graver l'empilement formé par la couche de départ et la première couche d'enrobage de manière à structurer un guide d'onde ayant un cœur en silicium ayant une surface supérieure sur laquelle est disposée la première couche d'enrobage ;

Selon un aspect particulier de l'invention, l'étape de fabrication a) comprend en outre la sous-étape suivante : encapsuler dans une couche en diélectrique l'ensemble formé par le guide d'onde ayant un cœur en silicium et la structure d'enrobage.

### Description détaillée

D'autres caractéristiques et avantages de la présente invention apparaîtront mieux à la lecture de la description qui suit en relation aux dessins annexés suivants.
La figure 1a illustre une vue de dessus d'un dispositif photonique selon l'état de l'art. Cette figure a été déjà décrite.
La figure 1b illustre les résultats de simulation de la transition optique pour un guide d'onde en silicium d'une épaisseur de 500 nm, 300 nm et 220 nm dans un dispositif selon l'état de l'art. Cette figure a été déjà décrite.
La figure 2a illustre une vue en coupe du dispositif photonique selon l'invention dans la zone de couplage.
La figure 2b illustre une vue de dessus du dispositif photonique selon l'invention dans la zone de couplage.
La figure 3 illustre les courbes d'évolution du signal optique restant dans le guide d'onde actif (en III-V), en fonction de l'évolution de la largeur du guide d'onde en silicium dans la zone de couplage, pour plusieurs dispositifs selon l'invention et selon l'état de l'art.
La figure 4a illustre les étapes d'un premier procédé de fabrication du dispositif photonique selon l'invention.
La figure 4b illustre les étapes d'un deuxième procédé de fabrication du dispositif photonique selon l'invention.
La figure 4c illustre les étapes d'un troisième procédé de fabrication du dispositif photonique selon l'invention.

Sur les figures d'illustration de l'invention, l'horizontal est représenté par des directions X et Y d'un repère orthogonal (X,Y,Z). La direction Z de ce repère orthogonal représente la direction verticale. Par la suite, les termes tels que « supérieur», « inférieur», « au-dessus », «en dessous », «haut» et «bas » sont définis par rapport à cette direction Z. Les termes « gauche » et « droite » sont définis par rapport à la direction X. Les termes «avant» et« arrière» sont définis par rapport à la direction Y. Par la suite, le terme « épaisseur » désigne l'épaisseur maximale d'un élément selon la direction Z, dite direction d'empilement. Le terme « largeur » désigne la dimension d'une couche selon la direction X.

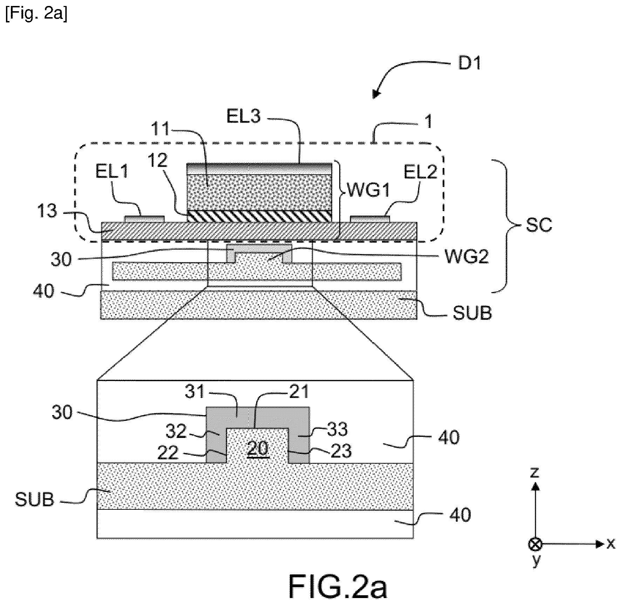

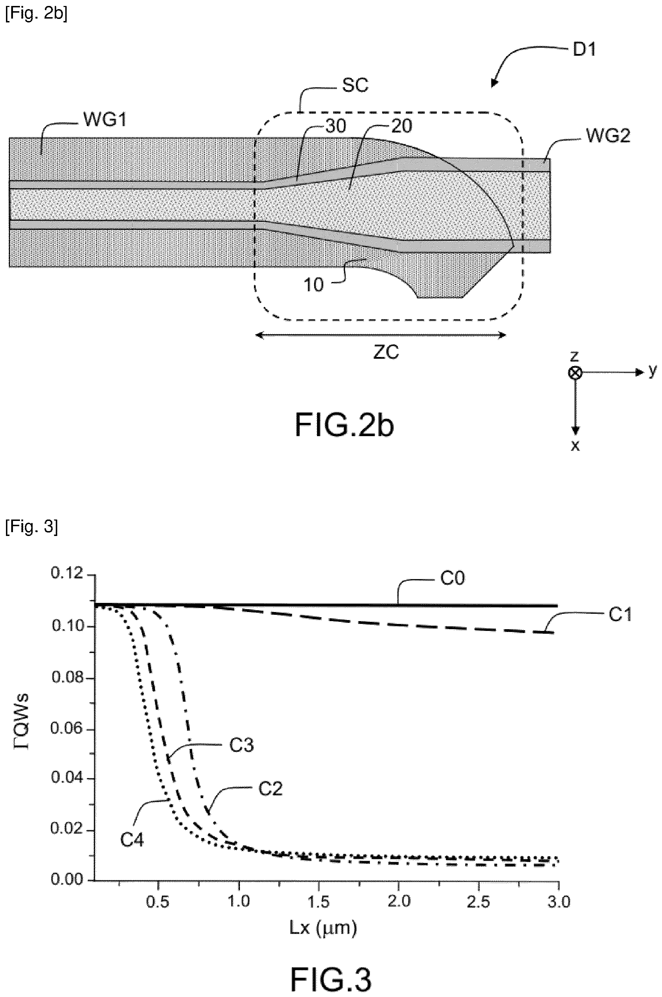

La figure 2a illustre une vue en coupe, selon le plan (X,Z), du dispositif photonique D1 selon l'invention au niveau de la zone de couplage ZC. La figure 2b illustre une vue de dessus, selon le plan (X,Y), du dispositif photonique D1 selon l'invention au niveau de la zone de couplage ZC. Le dispositif photonique D1 comprend un composant actif 1 formé par un empilement de couches en matériaux semi-conducteurs de type III-V, disposé sur un guide d'onde WG2 ayant un cœur en silicium. Le cœur en silicium est encapsulé dans une couche 40 en diélectrique ayant un indice de réfraction inférieur au silicium, par exemple en SiO₂. L'ensemble est disposé sur un substrat SUB, définissant un « plan de substrat » parallèle au plan (X,Y).

A titre d'exemple, le composant actif 1 est une source laser ou un amplificateur ou un modulateur d'un signal optique. Le composant actif 1 comprend une hétérostructure à ruban pour générer et/ou guider une onde électromagnétique, une première électrode EL1, une seconde électrode EL2 et une troisième électrode EL3. L'hétérostructure à ruban comprend un guide d'onde WG1 comprenant une couche de confinement inférieure 13, une couche de confinement supérieure 11 et une couche active 12. La couche active 12 est confinée entre la couche de confinement inférieure 13 et la couche de confinement supérieure 11. La couche de confinement supérieure 11 est en un premier matériau semiconducteur de type III-V, à titre d'exemple en InP dopé P ou en GaAs dopé P. La couche de confinement inférieure 13 est en un deuxième matériau semiconducteur de type III-V, à titre d'exemple en InP dopé N ou en GaAs dopé N. La couche active 12 est réalisée en un troisième matériau semiconducteur ayant une valeur de gap d'énergie Eg₁₂. Avantageusement, la couche active 12est réalisée en un alliage ternaire ou quaternaire de type III-V par exemple InGaAsP ou InGaAlAs. Alternativement, la zone active 12 est réalisée par un empilement de couches alternées de différentes compositions d'alliages ternaires ou quaternaires de type III-V. L'épaisseur de chaque couche dudit empilement étant de quelques nm à une dizaine de nm de manière à former une série de puits quantiques (traduction de l'expression anglaise « multi-quantum well layers »). La couche de confinement inférieur 13 présente une largeur supérieure à celle de la couche active 12 et de la couche de confinement supérieure 11 de manière à former un ruban de guidage (correspondant aux couches 11,12) disposé sur une base (correspondant à la couche de confinement inférieure 13).

Le premier guide d'onde WG1 s'étend selon une direction de guidage Y orthogonale à la direction d'empilement Z. Le second guide d'onde WG2 s'étend selon la même direction de guidage Y orthogonale à la direction d'empilement Z. Alternativement, le second guide d'onde WG2 s'étend selon une direction de guidage Y différente de celle du premier guide d'onde WG1 et orthogonale à la direction d'empilement Z.

Dans le cas d'une couche active réalisée par une couche massive, la valeur de gap d'énergie Eg₁₂du matériau constituant la couche active 12 est inférieure à la valeur de gap d'énergie Eg₁₁ de la couche de confinement supérieure 11 et à la valeur de gap d'énergie Eg₁₃ de la couche de confinement inférieure 13. Dans le cas d'une couche active réalisée par empilement de couches alternées, les matériaux constituant les couches de l'empilement alterné présentent chacune une valeur de gap d'énergie inférieure à la valeur de gap d'énergie Eg₁₁ de la couche de confinement supérieure 11 et à la valeur de gap d'énergie Eg₁₃ de la couche de confinement inférieure 13.

La troisième électrode EL3 est une couche en un matériau électriquement conducteur disposée sur la surface supérieure de la couche de confinement supérieure. La première et la deuxième électrodes EL1,EL2 sont deux couches en un matériau électriquement conducteur disposées sur la couche de confinement inférieure 13, de part et d'autre du ruban de guidage. Les électrodes EL1,EL2 et EL3 sont destinées à être connectées à un générateur électrique externe non représenté. L'application d'une tension électrique entre d'une part la troisième électrode EL3 et d'autre part les électrodes EL1, EL2 permet d'injecter des porteurs de charges positives (trous) dans le volume de la couche de confinement supérieure et des porteurs de charges négatives (électrons) dans le volume de la couche de confinement inférieure 13. Les porteurs de charges de signes opposés se retrouvent confinés dans la couche active 12 à petit gap, pour se recombiner. La recombinaison des électrons et des trous dans la couche active 12 permet l'émission de photons à une longueur d'onde correspondant à la valeur de gap d'énergie Eg₁₂. Les photons émis par recombinaison de porteurs de charges injectés sont confinés dans lesdites couches et forment une onde électromagnétique qui se propage dans le guide d'onde WG1 selon la direction de guidage Y.

Le dispositif photonique D1 comprend en outre une structure de couplage optique SC pour transférer au moins une partie d'un signal optique propagé du premier guide d'onde WG1 vers le second guide d'onde WG2, ou inversement. La structure de couplage optique SC selon l'invention comprend un premier prolongement 10 du cœur du premier guide d'onde WG1, un second prolongement 20 du cœur du second guide d'onde WG2 et une structure d'enrobage 30.

Le second prolongement 20 est disposé en dessous du premier prolongement 10. Ces deux prolongements 10, 20 sont positionnés à des hauteurs différentes selon l'axe Z et sont placés l'un en face de l'autre pour définir une zone de chevauchement, également appelée zone de couplage ZC. Le transfert du signal optique d'un guide d'onde à l'autre s'effectue dans cette zone de couplage ZC. Pour obtenir un couplage optique efficace entre ces deux prolongements, il est nécessaire que l'indice de réfraction effectif pour le mode confiné dans le second guide d'onde WG2 soit au moins aussi grand que l'indice effectif du mode confiné dans le premier guide d'onde WG1. La structure d'enrobage 30 est réalisée en un matériau d'enrobage ayant un indice de réfraction n₃₀ compris entre d'une part l'indice de réfraction du silicium et d'autre part l'indice de réfraction le plus élevé parmi les matériaux semi-conducteur formant chacune des couches semi-conductrices III-V du premier prolongement 10, c'est-à-dire parmi les couches de l'empilement 11,12,13. La structure d'enrobage 30 est disposée entre le second prolongement 20 et le premier prolongement 10 de manière à les séparer. La structure d'enrobage 30 permet d'augmenter la quantité du signal optique transmis du premier guide d'onde WG1 vers le second guide d'onde WG2 ou inversement obtenant ainsi un transfert du mode optique, adiabatique et sans augmenter l'épaisseur du cœur en silicium. Ainsi, il est possible de réaliser une transition du composant actif 1 vers le réseau photonique en silicium tout en gardant une épaisseur standard du cœur en silicium inférieure ou égale à 300nm. Ceci permet d'éviter une étape supplémentaire de croissance et de recuit thermique de silicium dans le procédé de fabrication et ainsi le simplifier et éviter les dégradations dues au recuit thermique.

Dans la structure d'enrobage 30 selon l'invention, le second prolongement 20 présente une largeur Lx selon la direction X qui augmente graduellement en fonction de l'avancement dans la zone de couplage ZC lorsque la structure de couplage optique SC est destinée à une transition du premier guide d'onde WG1 du composant actif 1 en un semi-conducteur III-V vers le second guide d'onde WG2 en silicium connecté au réseau photonique en silicium. Inversement, le second prolongement 20 présente une largeur Lx selon la direction X qui diminue graduellement en fonction de l'avancement dans la zone de couplage ZC lorsque la structure de couplage optique SC est destinée à une transition du second guide d'onde WG2 en silicium connecté au réseau photonique en silicium, vers le premier guide d'onde WG1 du composant actif 1 en un semi-conducteur III-V. La structure d'enrobage 30 permet en outre d'atteindre des taux de transition supérieurs à 90% pour un élargissement de la prolongation inférieure ou égale à 2µm.

Avantageusement, le premier prolongement 10 s'étend selon une direction non-rectiligne présentant une courbure non-nulle par rapport à la direction de guidage initiale Y à la fin de la zone de couplage ZC. Cela permet d'éviter les interférences entre le signal optique résiduel dans le premier guide d'onde WG1 et le signal optique transmis au second guide d'onde WG2 en sortie de la structure de couplage ZC.

La structure d'enrobage 30 comprend une première couche d'enrobage 31 disposée sur la surface supérieure 21 du second prolongement 20 en silicium. La première couche d'enrobage 31 présente un indice de réfraction n₃₀ compris entre d'une part l'indice de réfraction du silicium et d'autre part l'indice de réfraction le plus élevé parmi les matériaux semi-conducteur formant les couches semi-conductrices III-V du premier prolongement 10, c'est-à-dire parmi les couches de l'empilement 11,12,13 pour des longueurs d'ondes comprises entre 1520 nm et 1565 nm et/ou entre 1260 nm et 1360 nm. La première couche d'enrobage 31 sépare le premier prolongement 10 du second prolongement 20 de manière à permettre un meilleur taux de transition du signal optique d'un guide d'onde à l'autre.

Avantageusement, le matériau d'enrobage est transparent pour une longueur d'onde comprise entre 1520 nm et 1565 nm et/ou pour une longueur d'onde comprise entre 1260 nm et 1360 nm. Cela permet d'éviter l'absorption du signal optique propagé dans la structure d'enrobage 30 lors d'une transition.

De manière avantageuse, la première couche d'enrobage 31 est en SiGe. L'utilisation du SiGe en tant que matériau d'enrobage a montré une transition optique plus efficace par rapport à d'autres matériaux. Plus avantageusement, le matériau d'enrobage est l'alliage silicium-germanium de formule Si₍₁₋ₓ₎Geₓ, avec x compris entre 0.2 et 0.6. Cette plage de concentration permet d'avoir un indice de réfraction compris entre 3,6 et 4,05 tout en ayant un taux d'absorption de la lumière inférieur à 0,1% pour des longueurs d'ondes comprises entre 1520 nm et 1565 nm.

Avantageusement, l'épaisseur de la première couche d'enrobage 31 est inférieure ou égale à 130 nm. Cela permet d'éviter le risque de confinement du signal optique dans la structure d'enrobage 30 à l'issue d'une opération de transition à travers la structure de couplage SC.

Selon un mode de réalisation de l'invention, la structure d'enrobage 30comprend en outre une deuxième couche d'enrobage 32 disposée sur une première surface latérale 22 du second prolongement 20 et une troisième couche d'enrobage 33 disposée sur une seconde surface latérale 23 du second prolongement 20. La deuxième couche d'enrobage 32 et la troisième couche d'enrobage 33 sont toutes les deux constituées du matériau d'enrobage. On obtient ainsi une structure d'enrobage qui couvre toutes les surfaces externes (supérieure et latérales) du cœur en silicium du second guide d'onde WG2. Cela permet d'augmenter l'indice de réfraction effectif du second guide d'onde WG2. En effet, le mode optique confiné voit un indice de réfraction effectif résultant d'une moyenne des indices de réfraction autour de lui. Les parois latérales 32,33 à indice élevé, font monter la valeur de l'indice de réfraction effectif ce qui rend la transition plus efficace.

La figure 3 illustre les courbes d'évolution du signal optique restant dans le guide d'onde actif (en III-V), en fonction de l'évolution de la largeur du guide d'onde en silicium dans la zone de couplage, pour plusieurs dispositifs selon l'invention et selon l'état de l'art. L'augmentation de la largeur du guide d'onde en silicium dans la zone de couplage reflète l'avancement dans la zone de couplage selon la direction Y, puisque le second prolongement augmente de manière graduelle. (forme conique de la figure 2b). La courbe C0 correspond à une structure de couplage selon l'état de l'art sans structure d'enrobage avec une épaisseur de 220 nm pour le cœur en silicium. La courbe C1 correspond à une structure de couplage selon l'état de l'art sans structure d'enrobage avec une épaisseur de 300nm pour le cœur en silicium. La courbe C2 correspond à une structure de couplage selon l'état de l'art sans structure d'enrobage avec une épaisseur de 500nm pour le cœur en silicium. La courbe C3 correspond à une structure de couplage selon l'invention avec une structure d'enrobage de 100nm en SiGe et avec une épaisseur de 300nm pour le cœur en silicium. La courbe C4 correspond à une structure de couplage selon l'invention avec une structure d'enrobage de 130nm en SiGe et avec une épaisseur de 220nm pour le cœur en silicium. Les courbes C1 et C0 montrent qu'au moins 10% du signal optique reste confiné dans le premier guide d'onde WG1 du composant actif 1 le long de toute la structure de couplage, ceci démontre que la transition n'a pas été correctement réalisée dans les solutions de l'état de l'art. La courbe C2 montre une transition efficace, où le signal résiduel dans le premier guide d'onde WG1 atteint 2% à une largeur Lx=1µm. Cependant, la structure de couplage optique de la courbe C2 nécessite une étape de croissance supplémentaire du cœur en silicium pour atteindre les 500nm. La courbe C3 montre une transition efficace, où le signal résiduel dans le premier guide d'onde atteint 2% à une largeur Lx=0,7µm. Ceci indique une transition plus rapide que celle de la courbe C2, pour un cœur en silicium plus fin. La courbe C4 montre une transition efficace, où le signal résiduel dans le premier guide d'onde atteint 2% à une largeur Lx=0,6µm. Ceci indique une transition plus efficace que celle de la courbe C2 permettant d'avoir une structure de couplage optique SC moins encombrante pour un cœur en silicium plus fin.

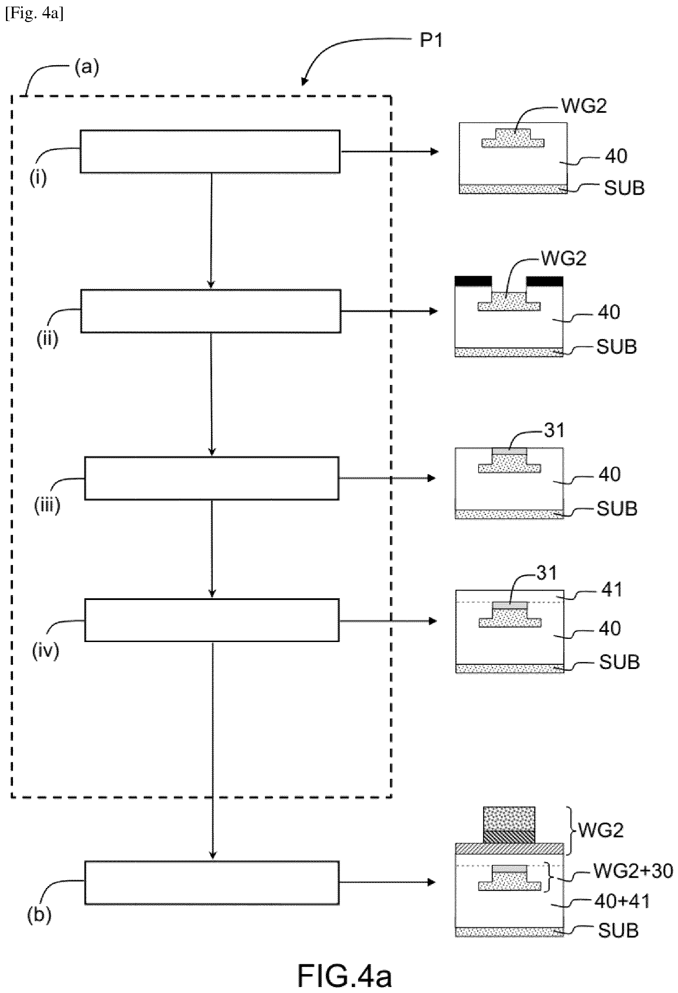

La figure 4a illustre les étapes d'un premier procédé P1 de fabrication du dispositif photonique selon l'invention.

La première étape a) consiste à fabriquer, sur un substrat SUB, un guide d'onde WG2 ayant un cœur en silicium. Le cœur en silicium comprenant au moins un prolongement 20 sur lequel est disposée une structure d'enrobage 30 en un matériau d'enrobage ayant un indice de réfraction n₃₀ supérieur à celui du silicium pour une longueur d'onde prédéterminée, par exemple comprise entre 1520 nm et 1565 nm ou comprise entre 1260 nm et 1360 nm. L'étape a) comprend la séquence de sous-étapes suivante.

Une première sous-étape (i) consiste à fournir un substrat SUB sur lequel est disposé un guide d'onde WG2 ayant un cœur en silicium. Le guide d'onde WG2 est encapsulé dans une couche en diélectrique 40. Ensuite, une deuxième sous-étape (ii) consiste à graver la couche en diélectrique 40 de manière à découvrir au moins une surface supérieure 21 du guide d'onde WG2 au niveau d'un prolongement 20 du cœur dudit guide d'onde WG2. La gravure est réalisée par une séquence d'opérations de dépôt de résine, de lithographie et de gravure pour définir les zones à graver. Ensuite, la troisième sous-étape (iii) consiste à déposer sur ladite surface supérieure 21 une première couche d'enrobage 31 en un matériau d'enrobage ayant un indice de réfraction n₃₀ supérieur à celui du silicium. La première couche d'enrobage 31 constitue la structure d'enrobage 30. Par exemple, la troisième sous-étape (iii) consiste à faire croitre par épitaxie une couche d'enrobage en Si₍₁₋ₓ₎Geₓ sur la surface supérieure 21, avec de préférence x , entre 0.2 et 0.6. L'étape a) comprend en outre une sous-étape optionnelle (iv) qui consiste à l'encapsulation de l'ensemble obtenue dans une couche en diélectrique 41 ; par exemple en SiO₂.

La deuxième étape (b) consiste à fabriquer un guide d'onde WG1 ayant un cœur en un matériau semi-conducteur de type III-V par une succession d'étapes de dépôt et de gravure de couches. Le guide d'onde WG1 présente un prolongement 10 disposé au regard de la structure d'enrobage 30. L'indice de réfraction du matériau d'enrobage étant inférieur à celui du matériau semi-conducteur de type III-V pour la plage de longueurs d'onde visée. L'ensemble formé par le prolongement 10, le prolongement 20 et la structure d'enrobage 30 forment une structure de couplage SC optique dans une zone de couplage ZC.

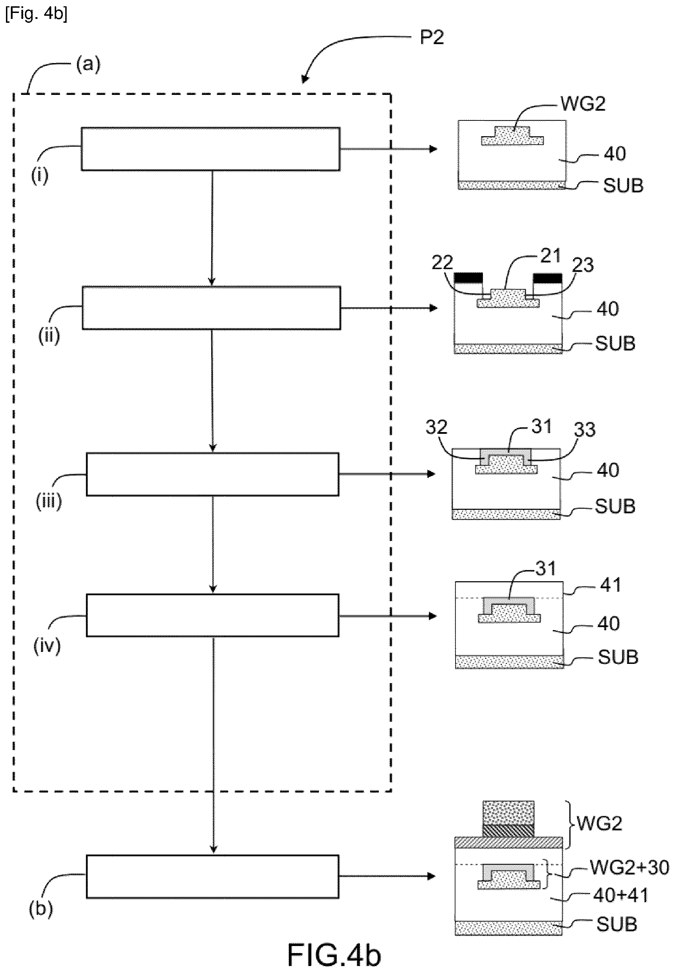

La figure 4b illustre les étapes d'un second procédé P2 de fabrication du dispositif photonique selon l'invention.

La première étape a) consiste à fabriquer, sur un substrat SUB, un guide d'onde WG2 ayant un cœur en silicium. Le cœur en silicium comprenant au moins un prolongement 20 sur lequel est disposée une structure d'enrobage 30 en un matériau d'enrobage ayant un indice de réfraction n₃₀ supérieur à celui du silicium pour une longueur d'onde prédéterminée, par exemple comprise entre 1520 nm et 1565 nm ou comprise entre 1260 nm et 1360 nm. L'étape a) comprend la séquence de sous-étapes suivante.

La première sous-étape (i) est similaire à celle décrite pour le premier procédé P1. Ensuite, la deuxième sous-étape (ii) consiste à graver la couche en diélectrique 40 de manière à découvrir une surface supérieure 21 du guide d'onde WG2 au niveau d'un prolongement 20 du cœur dudit guide d'onde WG2. Par ailleurs, ladite gravure de la sous-étape (ii) est réalisée de manière à découvrir en outre au moins une partie d'une première surface latérale 22 et d'une seconde surface latérale 23 du guide d'onde WG2 ayant un cœur en silicium. La gravure est réalisée par une séquence d'opérations de dépôt de résine, de lithographie et de gravure pour définir les zones à graver. Ensuite, la troisième sous-étape (iii) consiste à déposer sur ladite surface supérieure 21 une première couche d'enrobage 31, une deuxième couche d'enrobage 32 sur la première surface latérale 22 et une troisième couche d'enrobage 33 sur la deuxième surface latérale 23. La première couche d'enrobage 31, la deuxième couche d'enrobage 32 et la troisième couche d'enrobage 33 sont en en un matériau d'enrobage ayant un indice de réfraction n₃₀ supérieur à celui du silicium et constituent ensemble la structure d'enrobage 30. Par exemple, la troisième sous-étape (iii) consiste à faire croitre par épitaxie une couche d'enrobage en Si₍₁₋ₓ₎Geₓ sur les surfaces externes du cœur en silicium, avec de préférence x , entre 0,2 et 0,6. L'étape a) comprend en outre une sous-étape optionnelle (iv) similaire à l'étape d'encapsulation du premier procédé P1.

La deuxième étape (b) consiste à fabriquer un guide d'onde WG1 ayant un cœur en un matériau semi-conducteur de type III-V de manière similaire à l'étape (b) du premier procédé P1.

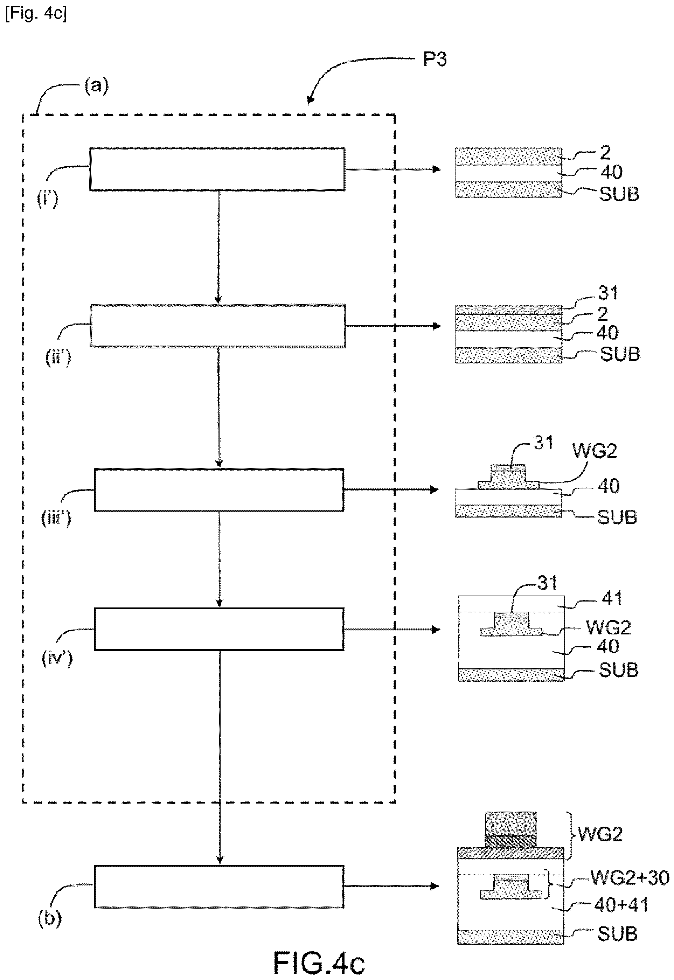

La figure 4c illustre les étapes d'un troisième procédé P3 de fabrication du dispositif photonique selon l'invention.

La première étape a) consiste à fabriquer, sur un substrat SUB, un guide d'onde WG2 ayant un cœur en silicium. Le cœur en silicium comprenant au moins un prolongement 20 sur lequel est disposée une structure d'enrobage 30 en un matériau d'enrobage ayant un indice de réfraction n₃₀ supérieur à celui du silicium pour une longueur d'onde prédéterminée, par exemple comprise entre 1520 nm et 1565 nm ou comprise entre 1260 nm et 1360 nm. L'étape a) comprend la séquence de sous-étapes suivante.

La première sous-étape (i') consiste à fournir un substrat SUB sur lequel est disposée une couche de départ 2 en silicium. Ensuite, la deuxième sous-étape (ii') consiste à déposer sur la couche de départ 2 une première couche d'enrobage 31 en un matériau d'enrobage ayant un indice de réfraction n₃₀ supérieur à celui du silicium.

La troisième sous-étape (iii') consiste à graver l'empilement formé par la couche de départ 2 et la première couche d'enrobage 31 de manière à structurer un guide d'onde WG2 ayant un cœur en silicium ayant une surface supérieure 21 sur laquelle est disposée la première couche d'enrobage 31. La première couche d'enrobage 31 constitue la structure d'enrobage 30. L'étape a) comprend en outre une sous-étape optionnelle (iv') similaire à l'étape d'encapsulation (iv) du premier procédé P1. La deuxième étape (b) consiste à fabriquer un guide d'onde WG1 ayant un cœur en un matériau semi-conducteur de type III-V de manière similaire à l'étape (b) du premier procédé P1.

### Références

*[1]* Zhang, J., Haq, B., O'Callaghan, J., Gocalinska, A., Pelucchi, E., Trindade, A. J & Roelkens, G.(2018). Transferprinting-based integration of a III-V-on-silicon distributed feedback laser. Optics express, 26(7), 8821-8830
*[2]* T. Thiessen et al., "Back-Side-an-BOX Heterogeneously Integrated III-V-on-Silicon O-Band Distributed Feedback Lasers," J. Light. Technol., vol. 38, no. 11, pp. 3000-3006, Jun. 2020, doi: 10.1109/JLT.2020.2978413*.*
*[3]* T. Aihara et al., "Membrane buried-heterostructure DFB laser with an optically coupled III-V/Si waveguide," Opt. Express, vol. 27, no. 25, p. 36438, Dec. 2019, doi: 10.1364/oe.27.036438*.*

## Revendications

1. Dispositif photonique (D1) comprenant un empilement de couches sur un substrat (SUB) selon une direction d'empilement (Z); ledit empilement comprenant :
- un premier guide d'onde (WG1) ayant un cœur comprenant une pluralité de couches (11,12, 13) empilées ; chaque couche de ladite pluralité de couches (11, 12,13) étant en un matériau semi-conducteur de type III-V ;
- un second guide d'onde (WG2) ayant un cœur en silicium;
- une structure de couplage optique (SC) pour transférer au moins une partie d'un signal optique propagé du premier guide d'onde (WG1) vers le second guide d'onde (WG2) ou inversement ; la structure de couplage optique (SC) comprenant :
o un premier prolongement (10) du cœur du premier guide d'onde (WG1) ;
o un second prolongement (20) du cœur du second guide d'onde (WG2) disposé au-dessous dudit premier prolongement (10) et disposé au regard dudit premier prolongement (10) ;
o une structure d'enrobage (30) en un matériau d'enrobage ayant un indice de réfraction (n₃₀) compris entre :
d'une part l'indice de réfraction du silicium ;
et d'autre part l'indice de réfraction le plus élevé parmi ceux desdits matériaux semi-conducteurs de type III-V, pour une longueur d'onde prédéterminée ;
la structure d'enrobage (30) étant disposée entre le second prolongement (20) et le premier prolongement (10) au moins selon la direction d'empilement (Z).

2. Dispositif photonique (D1) selon la revendication 1 dans lequel la structure d'enrobage (30) comprend une première couche d'enrobage (31) disposée sur une surface supérieure (21) du second prolongement (20).

3. Dispositif photonique (D1) selon l'une quelconque des revendications 1 ou 2 dans lequel la structure d'enrobage (30) comprend en outre une deuxième couche d'enrobage (32) disposée sur une première surface latérale (22) du second prolongement (20) et une troisième couche d'enrobage (33) disposée sur une seconde surface latérale (23) du second prolongement (20) ; la deuxième couche d'enrobage (32) et la troisième couche d'enrobage (33) étant constituées dudit matériau d'enrobage.

4. Dispositif photonique (D1) selon l'une quelconque des revendications 1 à 3 dans lequel le matériau d'enrobage est transparent pour une longueur d'onde comprise entre 1520 nm et 1565 nm et/ou pour une longueur d'onde comprise entre 1260 nm et 1360 nm.

5. Dispositif photonique (D1) selon l'une quelconque des revendications 1 à 4 dans lequel le matériau d'enrobage est l'alliage silicium-germanium.

6. Dispositif photonique (D1) selon la revendication 5 dans laquelle le matériau d'enrobage est l'alliage silicium-germanium de formule Si₍₁₋ₓ₎Geₓ , avec x compris entre 0,2 et 0,6.

7. Dispositif photonique (D1) selon l'une quelconque des revendications 2 à 6 dans lequel la première couche d'enrobage (31) présente une épaisseur inférieure ou égale à 130 nm.

8. Dispositif photonique (D1) selon l'une quelconque des revendications 1 à 7 dans lequel le cœur en silicium du second guide d'onde (WG2) présente une épaisseur (e_{Si}) inférieure ou égale à 300nm.

9. Dispositif photonique (D1) selon l'une quelconque des revendications 1 à 8 dans lequel la largeur (Lx(y)) du second prolongement (20) varie de manière graduelle.

10. Procédé de fabrication (P1, P2, P3) d'un dispositif photonique (D1) selon l'une quelconque des revendications précédentes comprenant les étapes suivantes :
a) fabriquer, sur un substrat (SUB), un guide d'onde (WG2) ayant un cœur en silicium comprenant un prolongement (20) sur lequel est disposée une structure d'enrobage (30) en un matériau d'enrobage ayant un indice de réfraction (n₃₀) supérieur à celui du silicium pour une longueur d'onde prédéterminée ;
b) fabriquer un guide d'onde (WG1) ayant un cœur comprenant une pluralité de couches (11,12, 13) empilées, avec chaque couche de ladite pluralité de couches (11, 12,13) en un matériau semi-conducteur de type III-V ; par une succession d'étapes de dépôt et de gravure de couches ; le guide d'onde (WG1) présentant un prolongement (10) disposé au regard de la structure d'enrobage (30) ; l'indice de réfraction (n₃₀) du matériau d'enrobage étant compris entre :
d'une part l'indice de réfraction du silicium ;
et d'autre part l'indice de réfraction le plus élevé parmi ceux desdits matériaux semi-conducteurs de type III-V, pour une longueur d'onde prédéterminée.

11. Procédé de fabrication (P1, P2) selon la revendication 10 dans lequel l'étape de fabrication a) comprend les sous étapes suivantes :
(i) fournir un substrat (SUB) sur lequel est disposé un guide d'onde (WG2) ayant un cœur en silicium, ledit guide d'onde (WG2) étant encapsulé dans une couche en diélectrique (40) ;
(ii) graver la couche en diélectrique de manière à découvrir au moins une surface supérieure (21) du guide d'onde (WG2) ;
(iii) déposer sur ladite surface supérieure (21) une première couche d'enrobage (31) en un matériau d'enrobage ayant un indice de réfraction (n₃₀) supérieur à celui du silicium pour une longueur d'onde prédéterminée ;

12. Procédé de fabrication (P2) selon la revendication 11 dans lequel l'étape (ii) de gravure est réalisée de manière à découvrir en outre au moins une partie d'une première surface latérale (22) et d'une seconde surface latérale (23) dudit guide d'onde (WG2) ayant un cœur en silicium.

13. Procédé de fabrication (P2) selon la revendication 12 dans lequel la sous-étape (iii) de dépôt comprend en outre le dépôt d'une deuxième couche d'enrobage (32) sur la partie découverte de la première surface latérale (22) et une troisième couche d'enrobage (33) sur la partie découverte de la seconde surface latérale (23); la deuxième couche d'enrobage (32) et la troisième couche d'enrobage (33) étant constituées dudit matériau d'enrobage.

14. Procédé de fabrication (P3) selon la revendication 10 dans lequel l'étape de fabrication a) comprend les sous étapes suivantes :
(i') fournir un substrat (SUB) sur lequel est disposée une couche de départ (2) en silicium ;
(ii') déposer sur la couche de départ (2) une première couche d'enrobage (31) en un matériau d'enrobage ayant un indice de réfraction (n₃₀) supérieur à celui du silicium pour une longueur d'onde prédéterminée ;
(iii') graver l'empilement formé par la couche de départ (2) et la première couche d'enrobage (31) de manière à structurer un guide d'onde (WG2) ayant un cœur en silicium ayant une surface supérieure (21) sur laquelle est disposée la première couche d'enrobage (31) ;

15. Procédé de fabrication (P1, P2, P3) selon l'une quelconque des revendications 10 à 14 dans lequel l'étape de fabrication a) comprend en outre la sous-étape suivante :
encapsuler (iv, iv') dans une couche en diélectrique (41) l'ensemble formé par le guide d'onde (WG2) ayant un cœur en silicium et la structure d'enrobage (30).
